# EUROPEAN PATENT SPECIFICATION

(11) **EP 0 847 688 B1**
(45) Date of publication and mention of the grant of the patent: **18.07.2001**
(21) Application number: 97203759.2
(22) Date of filing: 01.12.1997
(51) Int. Cl.: A01G 23/04

(54) **A method of uprooting or displacing trees**
Verfahren zum Entwurzeln und Versetzen von Bäumen
Méthode pour déraciner ou deplacer des arbres

(30) Priority: 11.12.1996 NL 1004746
(43) Date of publication of application: 17.06.1998
(73) Proprietor: Gebr. van Leeuwen Harmelen B.V., 3481 MC Harmelen (NL)
(72) Inventor: van Leeuwen, Marinus Teunis, 3481 MC Harmelen (NL)
(74) Representative: Boelsma, Gerben Harm, Ir.

(56) References cited:
- EP-B- 0 014 512
- WO-A-93/08679
- NL-A- 8 403 178
- DATABASE WPI Section Ch, Week 8215 Derwent Publications Ltd., London, GB; Class A97, AN 82-29718E [15] XP002037114 & JP 57 039 721 A (NIPPON DOJYO KENTEI)
- PATENT ABSTRACTS OF JAPAN vol. 18, no. 316 (C-1213) & JP 06 070651 A (TSUNODA)

## Description

The invention relates to a method of uprooting or displacing trees comprising the steps of digging a trench around the root system of the tree, cutting the roots and injecting a hardenable substance so as to prepare a ball of earth to be dug up together with the tree.

Such a method may be considered to be disclosed in PATENT ABTRACTS OF JAPAN, Vol. 18, no. 316 (C-1213) and the Japanese patent document JP 06 070651.

This well-known method is obviously meant to dig up lighter trees, whereas the reason for injecting of or spraying with a hardenable substance is to prevent the ball of earth from crumbling during transportation. Obviously lifting the ball of earth from the ground and supporting the same during transportation is playing no role.

The same type of method is disclosed in Japanese patent documents JP 57 039721 and JP 06 070651. These documents appear to be particularly concerned with holding the water within the ball of earth during transportation. Moreover the first mentioned document discloses the use of water glass as a hardenable substance.

The present invention aims at uprooting of old valuable trees at locations where e.g. building activities have been planned and saving such trees in a possibly undamaged state which allows the trees to grow soon to new and full stature at a new location. In the documents above referred to there is no disclosure with respect to the handling of such heavy trees.

In the International patent application WO 93/08679 a method for displacing large and therefore heavy trees is disclosed, wherein the ball of earth to be dug up together with the tree is "packed up" by placing wooden side walls into a trench dug out around the tree and connecting said side walls to form a crate around the root ball of the tree. The trench is widened at one side of the tree so as to enable a container bottom to be lowered into the widened trench and then be laterally moved in place under the root ball.

Starting from the well-known method as defined hereinabove in the opening lines, the invention provides a simpler method, wherein less ground needs to be dug out and wherein no supporting container needs to be used.

Accordingly the method according to the present invention is characterized in that a pull type anchor is brought into the ground at a plurality of locations distributed around the ball of earth to be prepared, after which the hardenable substance is injected through injection openings provided in those parts of the anchors which extend downwardly beyond said ball of earth so as to consolidate the ground under said ball of earth to form a supporting plate for said ball of earth, the upper end portions of the anchors, which extend above the earth's surface, being interconnected to form a lifting ring that surrounds the trunk of the tree.

A suitable pull anchor is the so-called screw injection anchor which is used on a large scale for anchoring building or hydraulic structures. (See e.g. published Dutch patent application 8403178).

The usual means for soil consolidation, such as bentonit to which cement is added, are suitable to be used as a hardenable substance. A particularly suitable material is water glass, which is watery and may thus easily penetrate into the ground to be consolidated.

It will be understood that the pulling anchors must be provided at such mutual spacing that the ground masses consolidated around the anchors will be united to a coherent plate or ring.

In order to promote an inwardly directed injection and to avoid excessive collar forming around the system of pull anchors it may be desirable to make use of pull anchors, wherein the number of injection openings emanating from the hollow core of the anchor body is larger at one (circumferential) side than it is at the opposite (circumferential) side. Such pull anchors are screwed in the ground such, that they get positioned with the side showing the largest number of injection openings directed to the axis of the tree to be rooted up.

In case of larger diameters of the ball of earth it may be desirable to position the pulling anchors according to a number of concentric circles, whereby the anchors in one circle are preferably positioned tangentially offset relative to the anchors in an adjacent circle.

The forming of a sufficiently rigid lifting ring may be realized in a simple manner by using an assembly of mutually crossing beams, by each of which two or more pulling anchor ends are connected to one another. Use can be made of fastening techiques which are usually applied when anchoring sheet pile walls, whereby the proximal ends of the (deviated) pulling anchors are fixed on beams on the outer side of the sheet pile wall to be anchored.

Upon arrival at the new location the lifting ring surrounding the tree can be simply broken down and a pulling force can be applied to each of the anchors individually to an extent, that they will be separated from the consolidated ground plate, while said ground plate being simultaneously broken down.

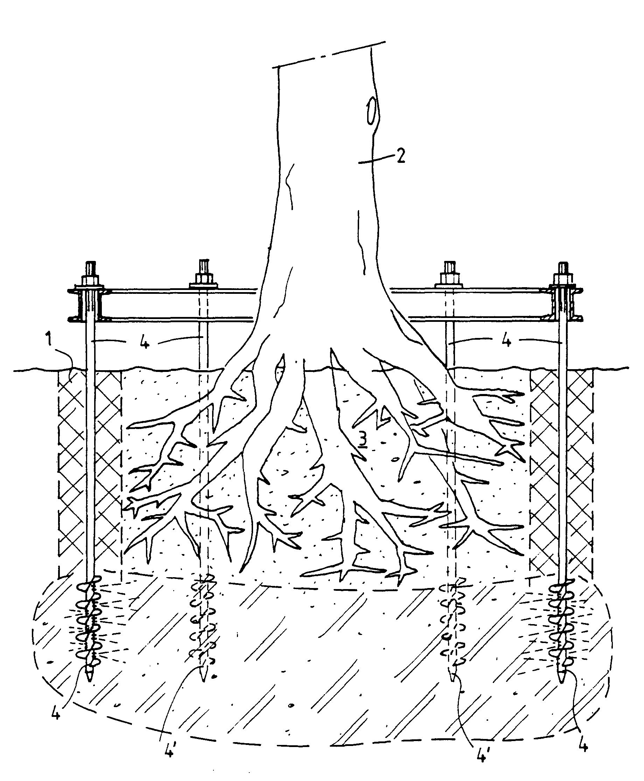

The invention will be hereinafter further explained by way of example with reference to the drawing.

The drawing shows a vertical section through a tree to be rooted up.

In the drawing the cross hatched portion 1 is a ditch to be digged around the tree 2 to be rooted up. Within the ditch the roots extending outwardly beyond the ball of earth 3 surrounded by the ditch are cut through.

With a ball of earth diameter of e.g. 3 meter the ditch may have a depth of 1-1,5 meter.

Before or after digging of the ditch a ring of screw injection anchors 4 is provided as close as possible around the ball of earth 3 (to be formed) so as to extend to a depth such, that the screw blade carrying anchor bodies 4' extend into the ground under the ball of earth 3 (to be formed).

The screw blade carrying anchor body has a length of e.g. 0,5 - 0,75 meter.

As remarked before use can be made of screw injection anchors of a well-known type, e.g. of the type shown in the above mentioned Dutch patent application. Such an anchor generally comprises a tube that has its lower end closed and has its upper end extending above ground level and adapted for connection to an injection pump. The lower part of the anchor carries screw blades and is provided with injection openings which laterally discharge between the screw blade windings.

Upon placing the anchors a hardenable substance, e.g. water glass, is supplied under pressure, said substance flowing through the injection openings in the anchor bodies to penetrate into the ground under the ball of earth 3 which has been previously formed or still to be formed.

The injected hardenable substance results in a consolidation of the ground around each individual anchor body. As desired there will be a tendency of the consolidated ground masses to "flow together" and form a coherent, strong bearig plate. This tendency may be stimulated by
1. selecting a higher injection pressure;
2. selecting a smaller spacing between the anchors;
3. positioning the injection openings such, that the injection will be effected substantially in a tangential and radial inward direction and
4. placing the anchors according to a number of concentric circles, wherein the anchors in one circle are preferably tangentially offset relative to those in the (an) adjacent circle.

If the ditch is dug and thereby the ball of earth is prepared prior to placing the anchors, an excessive injection radially outwardly may be prevented by placing a sheet pile wall around the (outer) ring of pulling anchors.

Of course the pulling anchors have to be designed in accordance with a maximum pulling load that will be enough for the combined pulling anchors to carry the entire weight of the tree with its ball of earth and the consolidated support plate.

The drawing shows a portion of a beam structure 5, that surrounds the tree as a hoisting ring and connects the anchor ends extending above ground level.

After the whole being transferred to the new location the application of a pulling load exceeding the maximum tentional strength to each of the anchors individually will be enough to cause these anchors to break off the ground plate while simultaneously causing the ground plate to break up.

## Claims

1. A method of uprooting or displacing trees comprising the steps of digging a trench around the root system of the tree, cutting the roots and injecting a hardenable substance so as to prepare a ball of earth to be dug up together with the tree, characterized in that a pull type anchor is brought into the ground at a plurality of locations distributed around the ball of earth to be prepared, after which the hardenable substance is injected through injection openings provided in those parts of the anchors which extend downwardly beyond said ball of earth so as to consolidate the ground under said ball of earth to form a supporting plate for said ball of earth, the upper end portions of the anchors, which extend above the earth's surface, being interconnected to form a lifting ring that surrounds the trunk of the tree.

2. A method according to claim 1, characterized in that use is made of screw injection anchors.

3. A method according to claim 2, characterized in that use is made of pull anchors, wherein the number of injection openings emanating from the hollow core of the anchor body is larger at one (circumferential) side than it is at the opposite (circumferential) side.

4. A method according to claims 1-3, characterized in that the anchors are positioned according to a plurality of concentric circles around the tree.

5. A method according to claim 4, characterized in that the locations of the anchors in one circle are tangentially offset relative to the anchors in an adjacent circle.

6. A method according to claims 1-3, characterized in that at the new location of the tree said anchors are broken off the consolidated underground by placing the anchors one by one under a pull load.

## Patentansprüche

1. Verfahren zum Roden oder Versetzen von Bäumen, wobei als Verfahrensschritte
um das Wurzelsystem des Baumes ein Graben ausgehoben wird, die Wurzel durchgeschnitten werden und durch das Einspritzen eines erhärtbaren Mittels ein Wurzelball vorbereitet wird, der mit dem Baum zusammen ausgehoben wird, dadurch gekennzeichnet, dass an mehreren um den Wurzelball verteilt liegenden Stellen eine Art Zuganker in den Boden hineingebracht wird, worauf das erhärtbare Mittel durch Einspritzöffnungen, welche in den sich unten bis am Wurzelball vorbei erstreckenden Teilen des Ankers vorgesehen sind, zur Festigung des Bodens unter dem Wurzelball eingespritzt wird, sodass eine Stützplatte für den Wurzelball erhalten wird, wobei die oberen Endteile der Anker, welche über der Bodenoberfläche hinausragen, unter Bildung eines den Stamm des Baumes umgebenden Hebelringes miteinander verbunden werden.

2. Verfahren nach Anspruch 1, dadurch gekennzeichnet, dass Schraubinjektionsanker verwendet werden.

3. Verfahren nach Anspruch 2, dadurch gekennzeichnet, dass Zuganker verwendet werden, wobei die Zahl der vom Hohlkern ausgehenden Einspritzöffnungen an einer (Umfangs-)stelle größer als an der entgegengesetzten (Umfangs-)stelle ist.

4. Verfahren nach Ansprüchen 1 - 3, dadurch gekennzeichnet, dass die Anker in mehreren konzentrischen Kreisen um den Baum angeordnet sind.

5. Verfahren nach Anspruch 4, dadurch gekennzeichnet, dass die Ankerstellen in einem Kreis in bezug auf die Ankerstellen im angrenzenden Kreis in tangentialer Richtung versetzt liegen.

6. Verfahren nach Ansprüchen 1 - 3, dadurch gekennzeichnet, dass die Anker am neuen Standort des Baumes aus der gefestigten Bodenplatte herausgebrochen werden, indem die Anker nacheinander einem Zuglast ausgesetzt werden.

## Revendications

1. Un procédé pour déraciner ou déplacer des arbres comprenant les étapes de creusement d'une tranchée autour des racines de l'arbre, de découpe des racines et d'injection d'une substance durcissante de façon à préparer une balle de terre devant être extraite ensemble avec l'arbre, caractérisé en ce qu'un ancrage du type de traction est amené dans le sol en une pluralité d'emplacements répartis autour de la balle de terre à préparer, la substance durcissante étant injectée après cela à travers des ouvertures d'injection disposées dans les parties des ancrages qui s'étendent vers le bas au-delà de ladite balle de terre de façon à consolider le sol sous ladite balle de terre pour former une plaque de support pour ladite balle de terre, les parties d'extrémité supérieure des ancrages, qui s'étendent au-dessus de la surface de la terre, étant interconnectées pour former un anneau de levage qui entoure le tronc de l'arbre.

2. Un procédé selon la revendication 1, caractérisé en ce que l'on utilise des ancrages à vis d'injection.

3. Un procédé selon la revendication 2, caractérisé en ce que l'on utilise des ancrages de traction, dans lesquels le nombre d'ouvertures d'injection provenant du coeur creux du corps de l'ancrage est plus grand d'un côté (circonférentiel) qu'il ne l'est du côté opposé (circonférentiel).

4. Un procédé selon l'une des revendications 1 à 3, caractérisé en ce que les ancrages sont positionnés selon une pluralité de cercles concentriques autour de l'arbre.

5. Un procédé selon la revendication 4, caractérisé en ce que les emplacements des ancrages sur un cercle sont décalés tangentiellement par rapport aux ancrages dans un cercle adjacent.

6. Un procédé selon les revendications 1 à 3, caractérisé en ce que, au niveau du nouvel emplacement de l'arbre, lesdits ancrages sont rompus par rapport au sous-sol consolidé en plaçant les ancrages un par un sous une charge de traction.
